# EUROPEAN PATENT SPECIFICATION

(11) **EP 3 271 692 B1**
(45) Date of publication and mention of the grant of the patent: **18.09.2019**
(21) Application number: 16714102.7
(22) Date of filing: 09.03.2016
(51) Int. Cl.: G01G 19/414, G06Q 20/20

(54) **SCALE SYSTEM**
WAAGENSYSTEM
SYSTÈME DE BALANCES

(30) Priority: 17.03.2015 US 201562134057 P; 08.03.2016 US 201615064077
(43) Date of publication of application: 24.01.2018
(73) Proprietor: Illinois Tool Works Inc., Glenview, IL 60025 (US)
(72) Inventor: RIZZOLO, Luiz, A., Glenview, IL 60025 (US); DAVIS, Robert, S., Glenview, IL 60025 (US); NIEBERDING, Michael, J., Glenview, IL 60025 (US)
(74) Representative: Trinks, Ole
(86) International application number: PCT/US2016/021434
(87) International publication number: WO 2016/148986

(56) References cited:
- EP-A1- 2 157 541
- WO-A1-2012/052801
- US-A1- 2011 307 316

## Description

### TECHNICAL FIELD

This application relates generally to scales utilized in grocery stores for weighing and pricing items and, more specifically, to a scale system and method to enable tracking and/or maintaining desired inventory of perishable food items within a grocery store.

### BACKGROUND

Scales have been used in stores such as supermarkets and groceries to weigh and price food items and to generate a pricing label for such food items. A typical store includes multiple scales located in multiple perishables departments (e.g., prepared foods, deli, meat and fish and bakery), as well as scales that are incorporated into wrappers. However, the scale system has utility beyond simply weighing and pricing items, given the volume of fresh item transactions that take place at such scales.

Supply chain management is a well-developed field. In retail stores, such as grocery stores, data is typically collected from the checkout point-of-sale (POS) systems and is rectified against known inventory levels for a variety of purposes, including reordering of stock as needed. However, improvements are continually sought, and in the grocery store environment tracking POS transactions does not provide a complete picture of item activity within the store.

### SUMMARY

In one aspect, a scale system includes a plurality of weighing scales located within a store, each weighing scale including a weighing station, each weighing scale configured for weighing and pricing fresh items. A multiplicity of the weighing scales are configured to produce labels for fresh items that have been priced for sale, wherein each weighing scale incorporates a discard transaction function and a transaction data tracking function. The discard transaction function is configured to enable an operator to enter data regarding fresh items being discarded, including data regarding (a) fresh item identity and (b) quantity of fresh item discarded. The transaction data tracking function stores a fresh item transaction record for (a) each fresh item transaction completed at the weighing scale in which a fresh item is priced for sale and (b) each fresh item transaction completed at the weighing scale in which a fresh item is discarded, wherein each fresh item transaction record includes data identifying at least (i) fresh item identity, (ii) quantity of the fresh item involved in the transaction, (iii) fresh item price or fresh item value, (iv) transaction date, (iv) fresh item brand and (v) fresh item supplier. A plurality of POS terminals are located in the store, at which items being purchased from the store are scanned and paid for, and purchase transaction records from the POS terminals are collected and stored by a POS server in communication with the POS terminals. A scale management computer is in communication with each of the weighing scales and in communication with the POS server. The scale management computer includes a transaction data collection function that obtains fresh item transaction records from each weighing scale and purchase transaction records from the POS server, thereby enabling identification of inconsistencies between fresh item transaction records from the weighing scales and purchase transaction records from the POS server.

Document EP2157541 A1 discloses a system and method for scale-based price and inventory management of perishable goods. Document US20110307316 A1 discloses a system and method for tracking food product expiration and initiating sales promotions using a food product scale.

The invention is a scale system as specified in claim 1.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 shows a diagram of a supply chain management system;
Fig. 2 shows a schematic depiction of a scale; and
Fig. 3 shows an exemplary evaluation process of POS transaction data and fresh item transaction data.

### DESCRIPTION

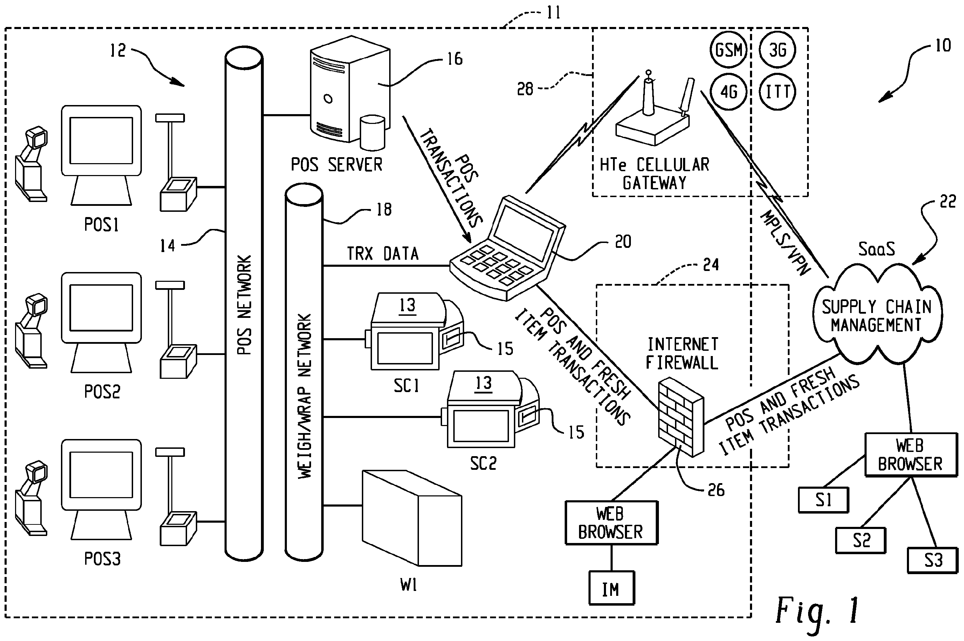

Referring to Fig. 1, a system 10 includes a plurality of weighing scales (e.g., SC1 and SC2, which could be located in a deli, meat & fish, bakery or fruit and vegetable department) located within a store 11. Each weighing scale includes a weighing station 13 and is configured for weighing and pricing fresh items (e.g., perishable food items). The weighing scales are configured to print and output labels for fresh items that have been priced for sale (e.g., where the labels are output from a label slot 15 on the scales). The system also includes a plurality of POS terminals (e.g., POS1, POS2 and POS3) at which items being purchased from the store are scanned and paid for by customers. The scales enable collection of fresh item transaction data and the POS terminals enable collection of purchase transaction data or sales transaction data.

As used herein a POS transaction or purchase transaction is considered any transaction in which a product passes through a POS as part of a customer purchase. A POS terminal or device may take the form of checkout lane manned by store personnel, such as POS1, POS2 or POS3 in Fig. 1, or could also be an unmanned checkout station such as a self-service kiosk. Moreover, for store locations where items are delivered, a POS terminal or device could take the form of a back-room or warehouse checkout/delivery station at which grouped items that are being removed from the store for delivery are scanned to account for the delivery transaction. Each POS terminal is connected to a network backbone (e.g., the POS Network backbone 14) for communication with a POS Server 16.

As used herein a fresh item transaction is considered any transaction in which a fresh food product is processed by a weighing scale or other fresh item delivery/handling device such as a wrapper device (e.g., wrapper W1 shown in Fig. 1, which could be located in the back room of a meat & fish department within the store and typically incorporates a weighing scale as well). The term weighing scale as used herein includes wrapper devices that incorporate a weighing scale. The terms weigh/wrap device and fresh item delivery/handling device as used herein include both scales and wrappers. Per Fig. 1, all of the fresh item delivery/handling devices are co-located within a grocer's facility and attached (e.g., wired or wireless) to a network backbone for communication purposes (e.g., either the POS network backbone 14 or a weigh/wrap network backbone 18).

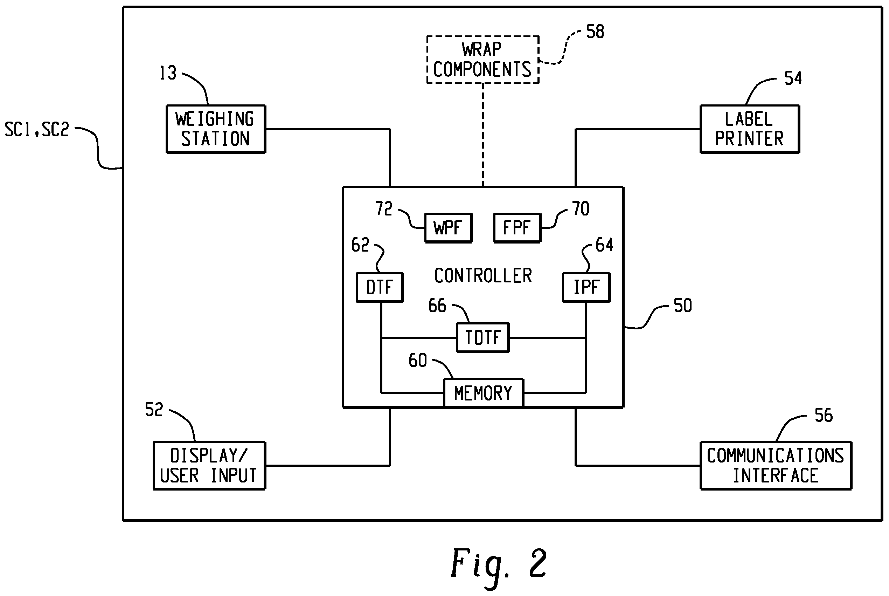

Per Fig. 2, each weighing scale includes a controller 50 connected to (i) receive load cell data from the weighing station 13, (ii) control a user interface 52 (e.g., in the form of a touch screen display, or a display and separate input keypad), (iii) control a label printer 54 and (iv) a communications interface 56 for enabling communication with other devices. Where the weighing scale is part of a wrapper, the controller may also be connected to control the wrap components 58 of the machine. The controller 50 includes memory 60 for storing information, such as product pricing and label print information needed by the scale to properly price items and print labels for the items. In addition, the controller includes a discard transaction function 62 configured to enable an operator to enter data regarding fresh items being discarded. For example, the scale interface 52 may be a touch screen interface with a selectable discard button. When an operator touches the discard button a discard screen is generated on the display that prompts that operator to input discard data, such as fresh item identification data and quantity of fresh item discarded (which may be input manually in the case of a by count item or which may be input via weighing of the item being discarded), as well as other data such as reason for the discard (e.g., item expired, item damaged etc.). The display enables an operator to complete the discard transaction by pressing a completion button.

The scale controller 50 also includes an item pricing function 64. A typical item pricing transaction by a weighing scale would involve identifying the fresh item to the scale (e.g., inputting an item code or number via the interface 52), weighing the fresh item or inputting count number for the item, establishing an item price (e.g., multiplying price-per-unit weight by the actual weight, or multiplying price per count by entered count) and printing a label to be applied to the item. The printed label typically includes a scannable bar code to facilitate checkout at a POS terminal, as well as item name/description, item price and item ingredients. When an operator selects the label print function for the pricing operation, the controller interprets the pricing transaction as being completed.

Importantly, the scale controller 50 also incorporates a transaction data tracking function 66 that stores a fresh item transaction record for each fresh item transaction completed at the weighing scale in which a fresh item is priced for sale and for each fresh item transaction completed at the weighing scale in which a fresh item is discarded. Each fresh item transaction record includes data identifying at least fresh item identity, quantity of the fresh item involved in the transaction, fresh item price or fresh item value, transaction date, fresh item brand and fresh item supplier. Operator identity (as obtained from operator login functionality of the scale) associated with the transaction may also be part of each transaction record.

Referring again to Fig. 1. purchase transaction records from the POS terminals are collected and stored by the POS server 16.

A scale management computer 20 (aka weigh/wrap device management solution) is connected to the scales SC1, SC2 and wrappers W1, and is likewise connected to the POS server 16. The scale management computer 20 includes a transaction data collection function that obtains fresh item transaction records from each weighing scale/wrapper and purchase transaction records from the POS server 16, enabling identification of inconsistencies between fresh item transaction records from the weighing scales and purchase transaction records from the POS server.

In this regard, the POS server 16 and weigh/wrap network backbone 18 are both connected to facilitate the provision of transaction data to the weigh/wrap device management computer 20. The primary function of the computer 20 is to communicate with the weigh/wrap devices (e.g., providing database updates etc.). The weigh/wrap device management solution receives or retrieves both POS purchase transaction data records from the grocer's back office POS server 16 and fresh item transaction data records from the scales and wrappers. The POS purchase transaction records will typically include data on products sold (e.g., as identified by UPC, PLU# or other number/code) with relevant additional data to include quantity, brand, supplier, price, date of sale, etc. The fresh item transaction records will typically include data on product weighed and/or wrapped (e.g., as identified by UPC, PLU# or other number/code), along with quantity (e.g., weight or number of units) of the item packaged and product label generated information (e.g., brand, supplier, price, date etc.). Voided transactions data that occur at the particular device may also be stored as fresh item transaction records. The scales and wrappers may also incorporate functionality that enables operators to load data on product waste or discard, as described above. This additional data may be included in the fresh item transaction data records delivered to the weigh/wrap device management solution 20.

All of the data regarding the various transactions are then distributed to an off-site supply chain analysis system 22, which may function as a Software as a Service system, for collection to be used for demand forecasting, planning, and replenishment calculations. In one arrangement the transaction data may be delivered from the weigh/wrap device management solution 20 to the supply chain analysis system 22 via an Internet connection 24 through a firewall 26. In an alternative arrangement the transaction data may be delivered from the weigh/wrap device management solution 20 to the supply chain analysis system 22 via a cellular gateway 28.

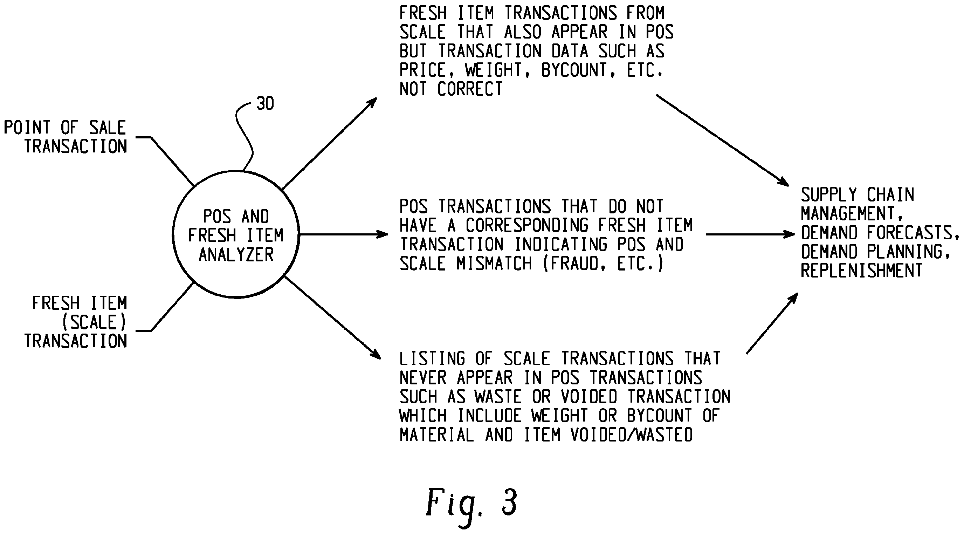

The combination of fresh item transaction records with purchase transaction records provides a unique supply chain management solution for grocers that need cross check of product sold within the POS and product handling at scale and wrap devices. As indicated in Fig. 3, the supply chain analysis system 22 may include a POS and fresh item analyzer 30 that is able to rectify (1) fresh item transactions from scales/wrappers that also appear as POS transactions, but where some data is not correct in the POS transaction, (2) POS transactions for fresh items that do not have a corresponding fresh item transaction (which could indicate fraud) and (3) fresh item transactions that never appear as POS transactions (such as shrink or waste, or voided transactions). Use and analysis of all of this data collectively improves demand forecasting, demand planning and item replenishment for the store.

In the case of fresh item transactions from scales/wrappers that also appear as POS transactions, but where some data is not correct in the POS transaction, specific actions can be taken by the system, such as generation of error reports and/or notifications.

In the case of POS transactions that do not have a corresponding fresh item transaction, specific actions can be taken by the system, such as generation of error reports and/or notifications. In some embodiments, the scales/wrappers may receive such notifications. In this regard, one or more of the scales/wrappers may include a fraud prevention function 70. In one implementation, responsive to the scale/wrapper receiving a fraud detection message/notification that includes operator identity data, the fraud prevention function 70 initiates an operator lockout that prevents the operator login functionality of the scale from logging in the operator associated with the operator identity data. In another implementation, responsive to the scale/wrapper receiving a fraud detection message/notification that includes operator identity data and fresh item identity data, the fraud prevention function 70 generates a fraud alert message when the operator associated with the operator identity data initiates a product pricing transaction at the weighing scale for the fresh item corresponding to the fresh item identity data. The fraud alert message may be sent by the scale via the communications interface to any desired location (e.g., store manager computer or mobile device).

The supply chain analysis system 22 may also generate reports and/or notifications regarding excessive waste. Again, in some embodiments the scales/wrapper may receive such notifications. In this regard, one or more of the scales/wrappers may include a waste prevention function 72. In one implementation, responsive to the scale/wrapper receiving a waste detection message/notification that includes operator identity data, the waste prevention function initiates a discard lockout that prevents the discard transaction function from allowing the operator associated with the operator identity data from completing a discard transaction. Alternatively, the waste prevention function may issue a waste alert message/notification.

An important point in the above system is the inclusion of both POS or purchase transaction data (from store POS systems) and fresh item transaction data (from store scales and wrappers) into the data that is used for supply chain forecasting, planning and replenishment. The supply chain system can thereby identify potential shrink, waste and/or fraud associated with the perishable food items.

As suggested in Fig. 1, demand forecasting, demand planning and replenishment of perishable food items is facilitated. Personnel, such as an inventory manager IM at the store or suppliers S1, S2, S3 can access the supply chain management system 22. By way of example, an inventory manager may access the system in order to check the inventory at the store. A supply coordinator at the supplier may access the system 22 in order to assure that any items, including fresh items, requiring resupply at the store are timely delivered.

It is to be clearly understood that the above description is intended by way of illustration and example only, is not intended to be taken by way of limitation, and that other changes and modifications are possible.

## Claims

1. A scale system (10), comprising:
- a plurality of weighing scales (SC1, SC2) located within a store, each weighing scale including a weighing station (13), each weighing scale configured for weighing and pricing fresh items, a multiplicity of the weighing scales (SC1, SC2) configured to produce labels for fresh items that have been priced for sale:
- a plurality of point-of-sale (POS) terminals (POS1, POS2, POS3) at which items being purchased from the store are identified and paid for, wherein purchase transaction records from the POS terminals (POS1, POS2, POS3) are collected and stored by a POS server (16) in communication with the POS terminals (POS1, POS2, POS3); and
- a scale management computer (20) in communication with each of the weighing scales (SC1, SC2) and in communication with the POS server (16),
**characterized in that**
each weighing scale (SC1, SC2) incorporates:
- an interface (52) enabling an operator to enter data regarding fresh items being discarded, including data regarding (a) fresh item identity and (b) quantity of fresh item discarded;
- a transaction data tracking function that stores a fresh item transaction record for (a) each fresh item transaction completed at the weighing scale (SC1, SC2) in which a fresh item is priced for sale and (b) each fresh item transaction completed at the weighing scale in which a fresh item is discarded, wherein each fresh item transaction record includes data identifying at least (i) fresh item identity, (ii) quantity of the fresh item involved in the transaction, (iii) fresh item price or fresh item value, (iv) transaction date, (iv) fresh item brand and (v) fresh item supplier; and
**in that** the scale management computer (20) includes a transaction data collection function that obtains fresh item transaction records from each weighing scale and purchase transaction records from the POS server (16), enabling identification of inconsistencies between fresh item transaction records from the weighing scales (SC1, SC2) and purchase transaction records from the POS server (16).

2. The scale system (10) of claim 1,
further comprising an off-site supply chain analysis system (22), wherein the scale management computer (20) is configured to send both the fresh item transaction records and the purchase transaction records to the off-site supply chain analysis system (22) that in turn is configured to:
(1) identify fresh item transaction records that have corresponding purchase transaction records, but where some transaction data in the purchase transaction record is inconsistent with transaction data of the fresh item transaction record,
(2) identify purchase transaction records for fresh items that do not have a corresponding fresh item transaction record; and
(3) identify fresh item transaction records that do not have a corresponding purchase transaction record.

3. The scale system (10) of claim 2,
wherein the off-site supply chain analysis system (22) is configured to evaluate one or more of fresh item shrink, fresh item waste and/or fresh item fraud and to generate fresh item inventory management requests that take into account such fresh item shrink, fresh item waste and/or fresh item fraud.

4. The scale system (10) of claim 2 or 3,
wherein one or more of the weighing scales (SC1, SC2) includes operator login functionality and a fraud prevention function, wherein, responsive to the weighing scale receiving a fraud detection message that includes operator identity data, the fraud prevention function initiates an operator lockout that prevents the operator login functionality from logging in the operator associated with the operator identity data.

5. The scale system (10) of one of claims 2 to 4,
wherein one or more of the weighing scales (SC1, SC2) includes operator login functionality and a waste prevention function, wherein, responsive to the weighing scale receiving a waste detection message that includes operator identity data, the waste prevention function initiates a discard lockout that prevents the discard transaction function from allowing the operator associated with the operator identity data from completing a discard transaction.

6. The scale system (10) of claim 4 or 3,
wherein one or more of the weighing scales (SC1, SC2) includes operator login functionality and a fraud prevention function, wherein, responsive to the weighing scale receiving a fraud detection message that includes operator identity data and fresh item identity data, the fraud prevention function generates a fraud alert message when the operator associated with the operator identity data initiates a product pricing transaction at the weighing scale for the fresh item corresponding to the fresh item identity data.

7. The scale system (10) of one of claims 3 to 6,
wherein the supply chain analysis system (22) is configured to provide reports for one or more of shrink, waste and/or fraud associated with the fresh items.

8. The scale system (10) of claim 7,
wherein the reports are accessible online to a store inventory manager (IM).

9. The scale system (10) of one of claims 2 to 8,
wherein the supply chain analysis system (22) is configured to facilitate perishable item demand forecasting, perishable item demand planning and perishable item replenishment for the store.

## Patentansprüche

1. Waagensystem (10), das Folgendes umfasst:
- mehrere Waagen (SC1, SC2), befindlich im Inneren eines Ladens, wobei jede Waage eine Wägestation (13) umfasst, wobei jede Waage zum Wägen und Auspreisen frischer Waren ausgelegt ist, wobei mehrere Waagen (SC1, SC2) dazu ausgelegt sind, Etiketten für frische Waren zu produzieren, die für den Verkauf ausgepreist wurden:
- mehrere Verkaufspunkt(POS, Point-of-Sale)-Endstationen (POS1, POS2, POS3), an denen Waren, die aus dem Laden gekauft werden, identifiziert und bezahlt werden, wobei Kauftransaktionsdatensätze von den POS-Endstationen (POS1, POS2, POS3) gesammelt und durch einen POS-Server (16) in Kommunikation mit den POS-Endstationen (POS1, POS2, POS3) gespeichert werden; und
- einen Wägeverwaltungscomputer (20) in Kommunikation mit jeder der Waagen (SC1, SC2) und in Kommunikation mit dem POS-Server (16),
**dadurch gekennzeichnet, dass**
jede Waage (SC1, SC2) Folgendes einschließt:
- eine Schnittstelle (52), die es einem Bediener ermöglicht, Daten bezüglich frischer Waren, die entsorgt werden, einzugeben, umfassend Daten bezüglich (a) der Identität der frischen Waren und (b) der Quantität der entsorgten frischen Waren;
- eine Transaktionsdatennachverfolgungsfunktion, die einen Frischware-Transaktionsdatensatz für (a) jede Frischware-Transaktion, die an der Waage (SC1, SC2) durchgeführt wurde, bei der eine frische Ware für den Verkauf ausgepreist wird, und (b) jede Frischware-Transaktion, die an der Waage durchgeführt wird, bei der eine frische Ware entsorgt wird, speichert, wobei jeder Frischware-Transaktionsdatensatz Daten umfasst, die zumindest (i) eine Identität der frischen Waren, (ii) eine Quantität der frischen Ware, die an der Transaktion beteiligt ist, (iii) einen Preis der frischen Ware oder einen Wert der frischen Ware, (iv) ein Transaktionsdatum, (iv) eine Marke der frischen Ware und (v) einen Zulieferer der frischen Ware umfasst; und dass
der Wägeverwaltungscomputer (20) eine Transaktionsdatensammelfunktion umfasst, die Frischwaren-Transaktionsdatensätze von jeder Waage und Kauftransaktionsdatensätze vom POS-Server (16) erhält, was Identifizierung von Inkonsistenzen zwischen Frischware-Transaktionsdatensätzen von den Waagen (SC1, SC2) und Kauftransaktionsdatensätzen vom POS-Server (16) ermöglicht.

2. Waagensystem (10) nach Anspruch 1,
ferner umfassend ein außerhalb des Einsatzortes befindliches Lieferkettenanalysesystem (22), wobei der Wägeverwaltungscomputer (20) dazu ausgelegt ist, sowohl die Frischwaren-Transaktionsdatensätze als auch die Kauftransaktionsdatensätze an das außerhalb des Einsatzortes befindliche Lieferkettenanalysesystem (22) zu senden, das seinerseits ausgelegt ist zum:
(1) Identifizieren von Frischwaren-Transaktionsdatensätzen, die zugehörige Kauftransaktionsdatensätze haben, bei denen aber einige Transaktionsdaten im Kauftransaktionsdatensatz inkonsistent mit Transaktionsdaten des Frischwaren-Transaktionsdatensatzes sind,
(2) Identifizieren von Kauftransaktionsdatensätzen für frische Waren, die keinen zugehörigen Frischwaren-Transaktionsdatensatz haben; und
(3) Identifizieren von Frischwaren-Transaktionsdatensätzen, die keinen zugehörigen Kauftransaktionsdatensatz haben.

3. Waagensystem (10) nach Anspruch 2,
wobei das außerhalb des Einsatzortes befindliche Lieferkettenanalysesystem (22) dazu ausgelegt ist, eines oder mehrere aus Frischwarenschrumpfung, Frischwarenverschwendung und/oder Frischwarentäuschung zu evaluieren und Frischwaren-Bestandsverwaltungsanforderungen zu erzeugen, die solche Frischwarenschrumpfung, Frischwarenverschwendung und/oder Frischwarentäuschung berücksichtigen.

4. Waagensystem (10) nach Anspruch 2 oder 3,
wobei eine oder mehrere der Waagen (SC1, SC2) Bedieneranmeldefunktionalität und eine Täuschungsverhinderungsfunktion umfassen, wobei in Reaktion darauf, dass die Waage eine Täuschungsdetektionsnachricht empfängt, die Bedieneridentitätsdaten umfasst, die Täuschungsverhinderungsfunktion eine Bedienersperre initiiert, die verhindert, dass die Bedieneranmeldefunktion den mit den Bedieneridentitätsdaten verbundenen Bediener anmeldet.

5. Waagensystem (10) nach einem der Ansprüche 2 bis 4, wobei eine oder mehrere der Waagen (SC1, SC2) Bedieneranmeldefunktionalität und eine Verschwendungsverhinderungsfunktion umfassen, wobei in Reaktion darauf, dass die Waage eine Verschwendungsdetektionsnachricht empfängt, die Bedieneridentitätsdaten umfasst, die Verschwendungsverhinderungsfunktion eine Entsorgungssperre initiiert, die verhindert, dass die Entsorgungstransaktionsfunktion einem mit den Bedieneridentitätsdaten verbundenen Bediener erlaubt, eine Entsorgungstransaktion durchzuführen.

6. Waagensystem (10) nach Anspruch 4 oder 3,
wobei eine oder mehrere der Waagen (SC1, SC2) Bedieneranmeldefunktionalität und eine Täuschungsverhinderungsfunktion umfassen, wobei, in Reaktion darauf, dass die Waage eine Täuschungsdetektionsnachricht empfängt, die Bedieneridentitätsdaten und Frischware-Identitätsdaten umfasst, die Täuschungsverhinderungsfunktion eine Täuschungsalarmnachricht erzeugt, wenn der mit den Bedieneridentitätsdaten verbundene Bediener eine Produktauspreisungstransaktion an der Waage für die frische Ware entsprechend den Frischware-Identitätsdaten initiiert.

7. Waagensystem (10) nach einem der Ansprüche 3 bis 6, wobei das Lieferkettenanalysesystem (22) dazu ausgelegt ist, Berichte für eines oder mehrere aus Schrumpfung, Verschwendung und/oder Täuschung in Verbindung mit den frischen Waren bereitzustellen.

8. Waagensystem (10) nach Anspruch 7,
wobei die Berichte online für einen Ladenbestandsmanager (IM, Inventory Manager) zugänglich sind.

9. Waagensystem (10) nach einem der Ansprüche 2 bis 8, wobei das Lieferkettenanalysesystem (22) dazu ausgelegt ist, Nachfrageprognose für verderbliche Waren, Nachfrageplanung für verderbliche Waren und Nachfüllung verderblicher Waren für den Laden zu ermöglichen.

## Revendications

1. Système de balance (10), comprenant :
- une pluralité de balances de pesée (SC1, SC2) installée dans un magasin, chaque balance de pesée comportant un poste de pesée (13), chaque balance de pesée étant configurée pour peser et calculer le prix d'articles frais, une multiplicité des balances de pesée (SC1, SC2) étant configurée pour produire des étiquettes pour des articles frais dont les prix de vente ont été calculés :
- une pluralité de terminaux de point de vente (POS) (POS1, POS2, POS3) au niveau desquels les produis achetés dans le magasin sont identifiés et payés, dans lequel des enregistrements de transactions d'achat provenant des terminaux POS (POS1, POS2, POS3) sont collectés et mémorisés par le serveur POS (16) en communication avec les terminaux POS (POS1, POS2, POS3) ; et
- un ordinateur de gestion de balances (20) en communication avec chacune des balances de pesée (SC1, SC2) et en communication avec le serveur POS (16),
**caractérisé en ce que**
chaque balance de pesée (SC1, SC2) incorpore :
- une interface (52) permettant à un opérateur d'entrer des données relatives à des articles frais mis au rebut, dont des données comportant (a) l'identité du produit frais et (b) la quantité de produit frais mise au rebut ;
- une fonction de suivi de données de transaction qui mémorise un enregistrement de transaction de produit frais pour (a) chaque transaction de produit frais réalisée au niveau de la balance de pesée (SC1, SC2) dans laquelle le prix de vente d'un produit frais est calculé et (b) chaque transaction de produit frais réalisée au niveau de la balance de pesée dans laquelle un produit frais est mis au rebut, dans lequel chaque enregistrement de transaction de produit frais comporte des données identifiant au moins (i) l'identité du produit frais, (ii) la quantité du produit frais impliquée dans la transaction, (iii) le prix ou la valeur du produit frais, (iv) la date de transaction, (iv) la marque du produit frais et (v) le fournisseur du produit frais ; et
**en ce que** l'ordinateur de gestion de balances (20) comporte une fonction de collecte de données de transactions qui obtient des enregistrements de transactions d'articles frais depuis chaque balance de pesée et des enregistrements de transactions d'achat depuis le serveur POS (16), permettant l'identification d'incohérences entre les enregistrements de transactions d'articles frais provenant des balances de pesée (SC1, SC2) et les enregistrements de transactions d'achat provenant du serveur POS (16).

2. Système de balance (10) selon la revendication 1,
comprenant en outre un système d'analyse de chaîne d'approvisionnement hors site (22),
dans lequel l'ordinateur de gestion de balances (20) est configuré pour envoyer à la fois les enregistrements de transactions d'articles frais et les enregistrements de transactions d'achat au système d'analyse de chaîne d'approvisionnement hors site (22) qui à son tour est configuré pour :
(1) identifier des enregistrement de transactions d'articles frais qui comportent des enregistrements de transactions d'achat correspondants, mais pour lesquels certaines données de transaction dans l'enregistrement d'achat sont incohérentes avec les données de transaction de l'enregistrement de transaction de produit frais,
(2) identifier des enregistrements de transactions d'achat d'articles frais qui n'ont pas d'enregistrement de transaction de produit frais correspondant ; et
(3) identifier des enregistrements de transactions d'articles frais qui n'ont pas d'enregistrement de transaction d'achat correspondant.

3. Système de balance (10) selon la revendication 2,
dans lequel le système d'analyse de chaîne d'approvisionnement hors site (22) est configuré pour évaluer un ou plusieurs d'un rétrécissement de produit frais, d'un déchet de produit frais et/ou d'une fraude de produit frais et générer des demandes de gestion d'inventaire de produits frais qui tiennent compte des rétrécissements de produits frais, déchets de produits frais et/ou fraudes de produits frais.

4. Système de balance (10) selon la revendication 2 ou 3,
dans lequel une ou plusieurs des balances de pesée (SC1, SC2) comportent une fonctionnalité de connexion d'opérateur et une fonction anti-fraude, dans lequel, en réponse à la réception par la balance de pesée d'un message de détection de fraude qui comporte des données d'identité d'opérateur, la fonction anti-fraude déclenche un blocage d'opérateur qui empêche la fonction de connexion d'opérateur de se connecter à l'opérateur associé aux données d'identité d'opérateur.

5. Système de balance (10) selon l'une des revendications 2 à 4,
dans lequel une ou plusieurs des balances de pesée (SC1, SC2) comportent une fonctionnalité de connexion d'opérateur et une fonction anti-déchet, dans lequel, en réponse à la réception par la balance de pesée d'un message de détection de déchet qui comporte des données d'identité d'opérateur, la fonction anti-déchet lance un blocage de mise au rebut qui empêche la fonction de transaction de mise au rébus de permettre à l'opérateur associé aux données d'identité d'opérateur de réaliser une transaction de mise au rebut.

6. Système de balance (10) selon la revendication 4 ou 3,
dans lequel une ou plusieurs des balances de pesée (SC1, SC2) comportent une fonctionnalité de connexion d'opérateur et une fonction anti-fraude, dans lequel, en réponse à la réception par la balance de pesée d'un message de détection de fraude qui comporte des données d'identité d'opérateur et des données d'identité d'article frais, la fonction anti-fraude génère un message d'alerte de fraude quand l'opérateur associé aux données d'identité d'opérateur lance une transaction de calcul de prix d'article au niveau de la balance de pesée pour le produit frais correspondant aux données d'identité de produit frais.

7. Système de balance (10) selon l'une des revendications 3 à 6,
dans lequel le système d'analyse de chaîne d'approvisionnement (22) est configuré pour fournir des rapports sur un ou plusieurs d'un rétrécissement, d'un déchet et/ou d'une fraude associés aux articles frais.

8. Système de balance (10) selon la revendication 7,
dans lequel les rapports sont accessibles en ligne par un responsable d'inventaire de magasin (IM).

9. Système de balance (10) selon l'une des revendications 2 à 8,
le système d'analyse de chaîne d'approvisionnement (22) est configuré pour faciliter les prévisions de demandes d'articles périssables, la planification des demandes d'articles périssables et le réapprovisionnement en articles périssables pour le magasin.
